# EUROPEAN PATENT SPECIFICATION

(11) **EP 3 466 669 B1**
(45) Date of publication and mention of the grant of the patent: **01.07.2020**
(21) Application number: 18176685.8
(22) Date of filing: 08.06.2018
(51) Int. Cl.: B32B 5/02, B32B 7/12, B32B 27/34, B32B 27/12, B32B 27/28

(54) **COMPOSITE TEXTILE PRODUCT**
VERBUNDTEXTILPRODUKT
PRODUIT TEXTILE COMPOSITE

(30) Priority: 03.10.2017 TW 106134238
(43) Date of publication of application: 10.04.2019
(73) Proprietor: YIE-CHENG TEXTILE TECHNOLOGY CO., LTD, Taoyuan City 330 (TW)
(72) Inventor: CHANG, Chih-Yu, 330 Taoyuan City (TW)
(74) Representative: Stöckeler, Ferdinand

(56) References cited:
- EP-A2- 1 026 310
- US-A- 4 847 142

## Description

### BACKGROUND

### Technology Field

This disclosure relates to a textile product and, in particular, to a composite textile product having good water-vapor permeability and water-proof property and comforting environmental protection and economic benefits.

### Description of Related Art

As the progress of technology, the textile materials have been developed from the simple knitted fabrics and woven fabrics to the functional fabrics and environmentally friendly fibers, and these developments create the transformation of the traditional textile industry. With the rapid development of high-tech research and development, the improvement of quality and versatility of textile products has become an important issue for technical personnel in this art while developing textile products.

The water-vapor transmission is the process of transferring moisture (including a gaseous water (e.g., moisture) or liquid water (e.g., sweat)) from the skin to the outer garment surface and allowing it to evaporate. Therefore, the water-vapor transmission is an important factor in maximizing wearer comfort during physical activity. "Water-vapor permeability" refers to the ability of evaporating the vapor released by the body during exercise through the film pores in the fabric to the outside environment, thereby achieving a cooling effect. A good water-vapor permeability can maintain the excellent comfort and dryness.

In addition, "water-proof' ability refers to the ability of a fabric to withstand the penetration of moisture from the external environment into the internal environment (e.g., skin). The surface of this fabric is usually coated with polyurethane (PU), thermoplastic polyurethane (TPU), polytetrafluoroethylene (PTFE), or the likes, or the fabric is manufactured by laminating soft films. However, the thermoplastic polyurethane (TPU) will deteriorate over time, and its interface strength with different nylon fabrics is insufficient. Besides, the key raw materials thereof are imported from other countries, so this conventional fabric cannot meet domestic requirements for producing high-order functional films.

In addition, the conventional textile materials (such as PU, TPU, and PTFE) that have water-vapor permeability and water-proof ability cannot be recycled, which is inconsistent with environmental protection and economic efficiency. For example, TPU has a water repellent treatment by perfluorinated compounds (PFCs), which are harmful to the environment and human body. On the other hand, those skilled in the art have also encountered bottlenecks in the development of textile products that promote water-vapor permeability and waterproof ability. Therefore, it is desired to develop a composite textile product that has excellent water-vapor permeability and waterproof ability and meets environmental protection and economic benefits. US4847142A and EP1026310A2 disclose a composite textile product

### SUMMARY

An objective of this disclosure is to provide a composite textile product that has excellent water-vapor permeability and waterproof ability and is recyclable for meeting environmental protection and economic benefits.

This disclosure provides a composite textile product, comprising a polyamide textile layer and a polyamide film bonded to the polyamide textile layer. The polyamide film has an average pore size ranging from 10µm to 150µm.

In one embodiment, a porosity of the polyamide film is between 10% and 20%.

In one embodiment, a thickness of the polyamide film is between 0.01mm and 0.1mm.

In one embodiment, a thickness of the polyamide textile layer is between 0.1mm and 0.3mm.

In one embodiment, the polyamide film comprises a copolymer material, and the copolymer material comprises a polyamide section and a polyether section.

In one embodiment, a water-vapor transmission rate of the composite textile product is between 4,000 g/m²/24 hrs and 10,000 g/m²/24 hrs.

In one embodiment, a water-vapor transmission rate of the polyamide film is between 6,000 g/m²/24 hrs and 120,000 g/m²/24 hrs.

In one embodiment, a hydrostatic head value of the composite textile product is between 30,000 mmH₂O and 32,000 mmH₂O.

In one embodiment, the polyamide film is bonded to the polyamide textile layer by polyurethane reactive hot melt adhesives (PUR).

As mentioned above, in the composite textile product of this disclosure, the first fluid containing water molecules (e.g. gaseous water) can penetrate through the polyamide film and the polyamide textile layer and then be transmitted to the outer environment, and the second fluid containing water molecules (e.g. liquid water) cannot penetrate through the polyamide textile layer and the polyamide film and cannot reach the inner environment. Accordingly, the composite textile product of this disclosure has good water-vapor permeability and water-proof property. In addition, the composite textile product of this disclosure is made of recyclable polyamide material, so this product can comfort environmental protection and economic benefits.

### BRIEF DESCRIPTION OF THE DRAWINGS

The disclosure will become more fully understood from the detailed description and accompanying drawings, which are given for illustration only, and thus are not limitative of the present disclosure, and wherein:
FIG. 1A is a schematic diagram showing a composite textile product according to a first embodiment of this disclosure;
FIG. 1B is a schematic diagram showing the composite textile product of FIG. 1A in use;
FIG. 1C is a schematic diagram showing another aspect of the composite textile product of FIG. 1A;
FIG. 2 is a schematic diagram showing the polyamide film of the composite textile product of FIG. 1A;
FIG. 3 is a schematic diagram showing an electronic microscope photo of the polyamide film of the composite textile product of this disclosure; and
FIG. 4 is a schematic diagram showing another electronic microscope photo of the polyamide film of the composite textile product of this disclosure.

### DETAILED DESCRIPTION OF THE DISCLOSURE

The present disclosure will be apparent from the following detailed description, which proceeds with reference to the accompanying drawings, wherein the same references relate to the same elements.

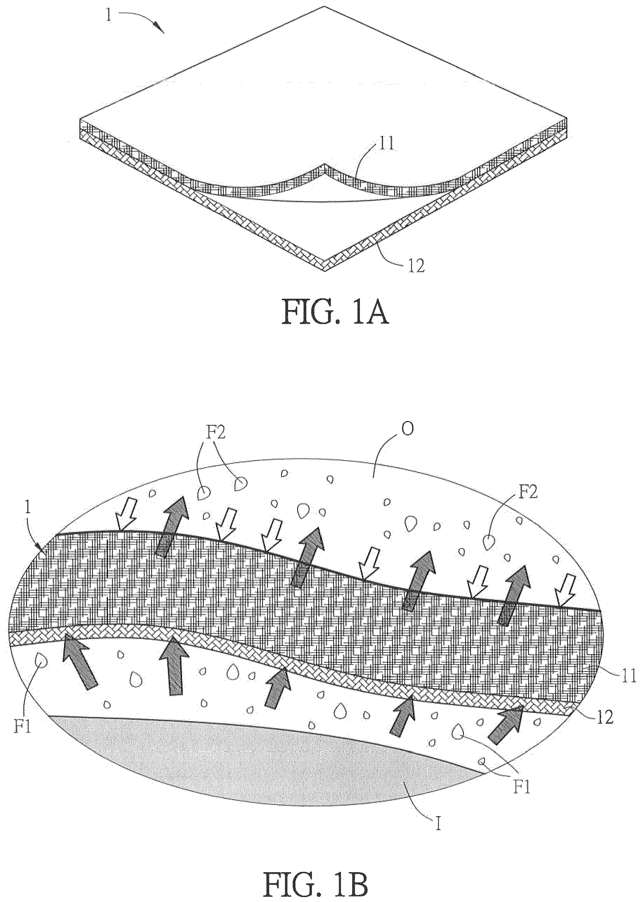

FIG. 1A is a schematic diagram showing a composite textile product according to a first embodiment of this disclosure. As shown in FIG. 1A, the composite textile product 1 includes a polyamide textile layer 11 and a polyamide film 12. The polyamide film 12 is bonded to the polyamide textile layer 11. The polyamide film 12 has a plurality of micro holes, and an average pore size of the micro holes ranges from 10µm to 150µm.

In this embodiment, a thickness of the polyamide textile layer 11 is between 0.1mm and 0.3mm. For example, the thickness of the polyamide textile layer 11 can be 0.15mm, 0.2mm, 0.22mm, or 0.25mm. The porosity of the polyamide film 12 is between 10% and 20%. In particular, the polyamide textile layer 11 can be any product made of nylon fibers. In this embodiment, the thickness of the polyamide film 12 is between 0.01mm and 0.1mm. For example, the thickness of the polyamide film can be 0.02mm, 0.04mm, 0.06mm, or 0.08mm. The polyamide textile layer 11 and the polyamide film 12 can be bonded by polyurethane reactive hot melt adhesives (PUR), and this disclosure is not limited.

FIG. 1B is a schematic diagram showing the composite textile product of FIG. 1A in use. As shown in FIG. 1B, if the composite textile product 1 is applied to the clothes for human, when a user wears the composite textile product 1, the polyamide film 12 is closer to the skin of the user. In other words, the polyamide textile layer 11 is away from the skin of the user and is closer to the outer space when the user wears the composite textile product 1. In this case, the outer space outside the polyamide textile layer 11 is defined as an outer environment O, and the space between the polyamide film 12 and the skin of the user is defined as an inner environment I.

The composite textile product 1 of this embodiment has a water-vapor permeable effect. In general, the human body usually sweats and generates water vapor (containing water molecules). If the user wears the clothes made of the composite textile product 1, the inner environment I between the polyamide film 12 and the skin of the user will have a higher humidity than the outer environment O. Accordingly, a moisture pressure difference between inner environment I and the outer environment O, which are located at two sides of the composite textile product 1 (the clothes) can be generated. Accordingly, the water molecules of the water vapor (the first fluid F1 containing water molecules) will flow from the inner environment I with higher humidity to the outer environment O. In more detailed, the water molecules can pass through the micro holes of the polyamide film 12 and migrate along the gray arrows of the figure. As a result, the water molecules can penetrate through the polyamide film 12 and the polyamide textile layer 11 and move from the inner environment I to the outer environment O. In addition, the polyamide film 12 of this embodiment also has hydrophilicity, so that it can absorb the water molecules and diffuse the water molecules to the polyamide textile layer 11. Then, the water molecules can be evaporated to the outer environment O so as to finish desorption.

In addition, the composite textile product 1 of this embodiment also has a water-proof effect. For example, when the outer environment O contains liquid water from rain or snow (the second fluid F2 containing water molecules), the liquid water cannot pass through the micro holes of the polyamide film 12 along the white arrows. Thus, the liquid water in the outer environment O cannot reach the inner environment I. As a result, the composite textile product 1 can provide a water-proof effect.

Moreover, since the composite textile product 1 of this embodiment is made of polyamide material, it can be recycled by physical or chemical method. In more detailed, the recycled polyamide material can be formed into polyamide plastic particles, which can be easily used in the manufacturing processes such as wire drawing process or ejection process. The recyclable property of the composite textile product 1 can reduce the generation of waste and thus be benefit to the environmental protection.

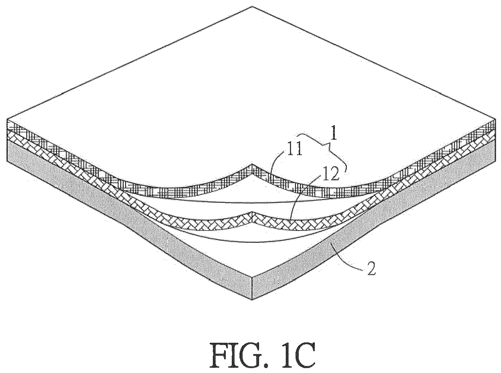

Referring to FIG. 1C, in another aspect, the composite textile product 1 of this embodiment can also be cooperated with the textile layer 2 having another function (e.g. windproof or warm) according to the requirements of the user or the manufacturer. As shown in FIG. 1C, the additional textile layer 2 can be disposed at one side of the polyamide film 12 away from the polyamide textile layer 11 (close to the inner environment I). Alternatively, the additional textile layer 2 can be disposed at one side of the polyamide textile layer 11 away from the polyamide film 12 (close to the outer environment O). In this embodiment, the material of the textile layer 2 may include other than polyamide material and can be optionally selected based on the actual requirement. This disclosure is not limited. In addition, the composite textile product 1 and the textile layer 2 can be configured by gluing, sewing or fusing. Any approach that can substantially remain the waterproof ability and moisture permeability of the final product can be used to fabricate the composite textile product 1, and this disclosure is not limited.

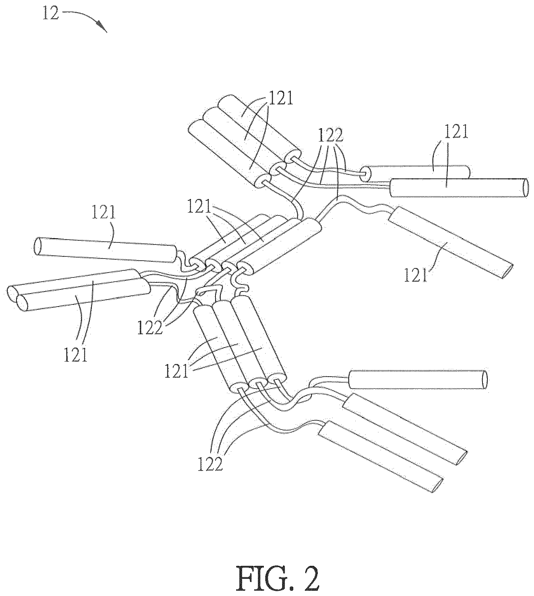

In this embodiment, the hydrophilicity of the polyamide film 12 is provided by the copolymer material contained in the polyamide film 12. As shown in FIG. 2, the copolymer material is nylon elastic member containing a polyamide section 121 and a polyether section 122. In practice, the copolymer material contains the polyether block amide (PEBA) compound prepared by the polymerization of polyamide and polyether. The polyamide section 121 has higher rigidity (higher hardness), so it has good wear resistance, chemical resistance, and high temperature resistance. In addition, the polyether section 122 has lower rigidity (lower hardness), so it has good water-vapor permeability, elastic recovery rate, and bending fatigue resistance. Accordingly, the polyamide film 12, which is made by the polymerization of polyamide and polyether and the film extrusion process, can have a good elasticity. Moreover, since the polyamide film 12 contains the structure of polyamide section 121, it can have a good wear resistance better than the conventional TPU film. As a result, the composite textile product 1 containing the polyamide film 12 can satisfy the requirements of wear resistance, water-vapor permeability, waterproof, and bending fatigue resistance for the outdoor sport product. To be noted, the above-mentioned polymerization and film extrusion process are the known knowledge for the skilled person in the art, so the detailed descriptions thereof will be omitted.

As mentioned above, in this embodiment, the copolymer material is prepared by the polymerization of polyamide and polyether. In this embodiment, the polyamide (PA) can be, for example but not limited to, PA6, PA11, PA12, PA46, PA66, PA610, or PA612, and the polyether can be polyether resin. The polyamide and polyether can have the following formulas (II) and (III):

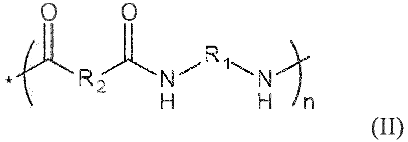

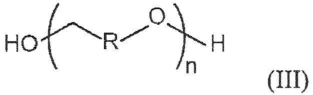

Wherein, each of R, R₁ and R₂ is independently hydrocarbyl (e.g. alkyl, alkenyl, or cycloalkyl), and n is a positive integer.

The experimental examples of the composite textile product 1 of this embodiment will be described hereinafter. To be noted, the following description is used to describe the present disclosure in detail so those skilled in the art can realize it, but is not intended to limit the scope of the present disclosure.

### Experimental example 1: tests for water-vapor permeability and waterproof ability of the composite textile product

In the experimental example, the composite textile product is tested to realize the water-vapor permeability and waterproof ability thereof, and the polyamide film is tested to realize the water-vapor permeability thereof. In particular, the standard for measuring the water-vapor permeability is different in different countries. For example, the measurement standard in USA is ASTM E96 (g/m^{2∗}24hr), which has a measurement condition for dry continental climate, so that the measurement result can realize the water-vapor transmission ability in sunny day. The measurement standard in Japan is JIS L 1099 (g/m^{2∗}24hr), which has a measurement condition for humid island climate, so that the measurement result can realize the water-vapor transmission ability in cloudy-rainy day. These two measurement standards are all applied in this experimental example. The water-vapor permeability is evaluated by water-vapor permeability test, and the waterproof ability is evaluated by hydrostatic head test. The tests of the water-vapor permeability and waterproof ability of the composite textile product is assigned to Intertek Testing Services Taiwan Ltd. The test samples include the polyamide textile layer (sample No. WR-WNR0007) and polyamide film (sample No. EVO-20) (Mw: 40,000∼100,000 g/mole). The sample is a lamination sample made of a copolymer containing polyamide having the formula (II), wherein each of R₁ and R₂ is independently C1∼C6 hydrocarbyl, and polyether having the formula (III), wherein R is C1∼C6 hydrocarbyl. The polyamide textile layer contains 100% of polyamide (134 piece/inch ^{∗} 70 piece/inch, 70 denier ^{∗} 160 denier). First, the polyamide textile layer is subjected to a water repellent treatment, and then the polyamine textile layer is bonded to the polyamide film by a lamination manner. The water-vapor permeability is evaluated based on ASTM E96 BW 2015 (inverted cup method) (test temperature: 23 °C, relative humidity: 50%±3%, wind speed: 0.1∼0.2/sec). The test sample is locked on a round cup and inverted on a round turntable in the tester (membrane surface contacts with water). After placing the test sample and waiting for one hour, the round cup is retrieved out and the weight of the water in the round cup is tested. Then, the data is calculated as the water-vapor permeability index. In addition, The water-vapor permeability is also evaluated based on JIS L 1099-2012 B1 (potassium acetate inverted test) (test temperature: 23 °C, relative humidity: 30%±3%). The potassium acetate solution is putted into the test cup to 2/3 volume, and then a Teflon film is provided and fixed on the cup. The test sample is locked on the round cup, water is placed in the cup, and the water contacts the membrane surface. Then, the sample cup is putted into the potassium acetate sample (the surface of the polyamide textile layer 12 is in contact with the Teflon film). After 15 minutes, the weight of potassium acetate is measured, and the calculated data is used as the water-vapor permeability index.

The hydrostatic head test can be referred to the method B, chapter 7.1.2, JIS L 1092-2009. In detailed, the test sample is locked in the test disc on the tester. The surface of the polyamide film faces upward, and the surface of the polyamide textile layer contacts water. The water is poured into the disc at a fixed speed. This is to test the tolerable pressure (water pressure) thereof, which can be served as a waterproof index. This experiment is repeated 5 times (hydrostatic head values are 31,990 mmH₂O, 31,520 mmH₂O, 31,760 mmH₂O, 31,260 mmH₂O, and 31,570 mmH₂O), and the average value thereof is calculated. The test results of composite textile product are shown in Table 1.

**Table 1**

| Water-vapor permeability (ASTM E96 BW 2015) | Water-vapor permeability (JIS L 1099-2012 B1) | Average hydrostatic head value |
|---|---|---|
| 4,130 g/m²/24 hrs | 9,650 g/m²/24 hrs | 31,620 mmH₂O |

In addition, the water-vapor permeability test of the polyamide film can be performed based on the above-mentioned ASTM E96 BW 2015or JIS L 1099-2012 B1. The test results indicate that the water-vapor permeability of a single polyamide film is between 6,000 g/m²/24 hrs and 120,000 g/m²/24 hrs.

The experiment results indicate that the composite textile product of this disclosure has good water-vapor permeability and water-proof property.

### Experimental example 2: electronic microscope observation of composite textile product

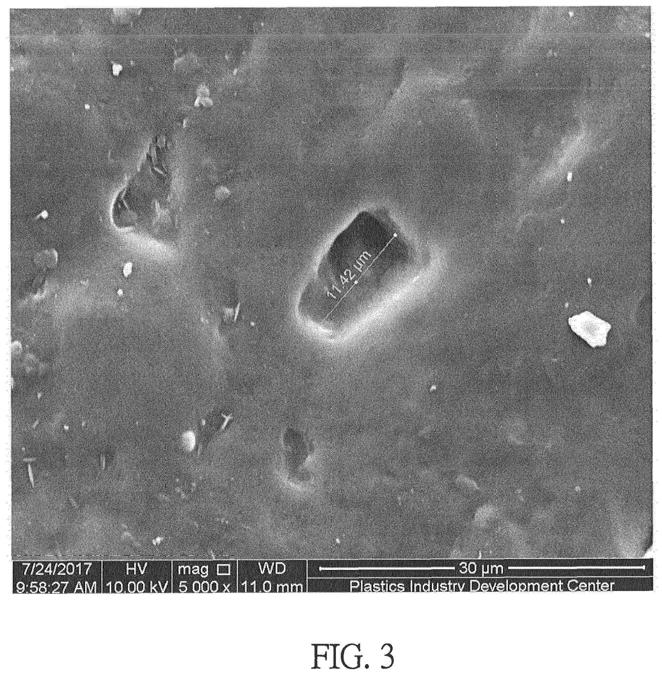

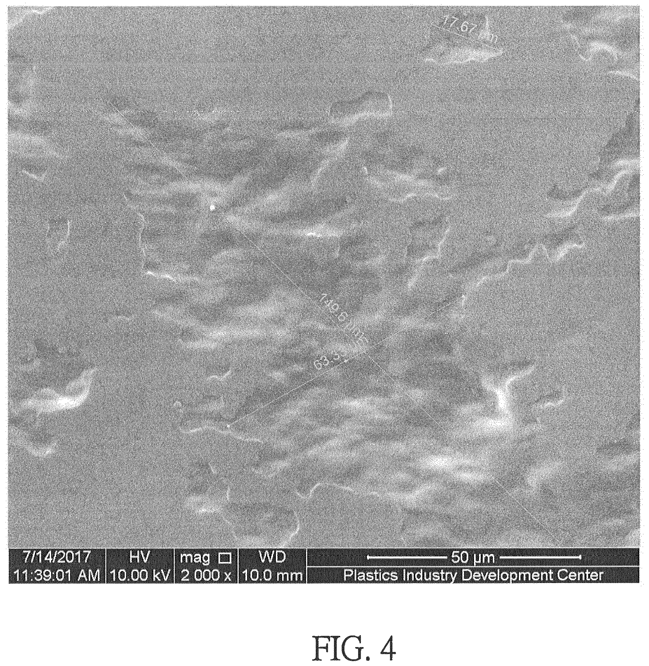

In this experimental example, the polyamide film of the composite textile product of this embodiment is provided and observed under the electronic microscope so as to realize the pore size of the polyamide film. This experiment is assigned to Plastics Industry Development Center (Taiwan). The electronic microscope observation results are shown in FIGS. 3 and 4. Referring to FIGS. 3 and 4, the pore size of the polyamide film ranges from 11.42 µm to 149.6 µm. Accordingly, the polyamide film can block the passage of liquid water molecules, but allow the passage of gaseous water molecules (water vapor).

In summary, the composite textile product of this disclosure has a polyamide textile layer and a polyamide film, so that the first fluid containing water molecules (gaseous water) can penetrate through the polyamide film and the polyamide textile layer and then be transmitted to the outer environment, and the second fluid containing water molecules (liquid water (e.g. rain or snow water)) cannot penetrate through the polyamide textile layer and the polyamide film and cannot reach the inner environment. Accordingly, the composite textile product of this disclosure has good water-vapor permeability and water-proof property. In addition, the composite textile product of this disclosure is made of recyclable polyamide material, so this product can comfort environmental protection and economic benefits.

## Claims

1. A composite textile product, comprising:
a polyamide textile layer; and
a polyamide film bonded to the polyamide textile layer, wherein the polyamide film has an average pore size ranging from 10µm to 150µm.

2. The composite textile product according to claim 1, wherein a porosity of the polyamide film is between 10% and 20%.

3. The composite textile product according to claim 1, wherein a thickness of the polyamide film is between 0.01mm and 0.1mm.

4. The composite textile product according to claim 1, wherein a thickness of the polyamide textile layer is between 0.1mm and 0.3mm.

5. The composite textile product according to claim 1, wherein the polyamide film comprises a copolymer material, and the copolymer material comprises a polyamide section and a polyether section.

6. The composite textile product according to claim 1, wherein a water-vapor transmission rate of the composite textile product is between 4,000 g/m²/24 hrs and 10,000 g/m²/24 hrs.

7. The composite textile product according to claim 1, wherein a water-vapor transmission rate of the polyamide film is between 6,000 g/m²/24 hrs and 120,000 g/m²/24 hrs.

8. The composite textile product according to claim 1, wherein a hydrostatic head value of the composite textile product is between 30,000 mmH₂O and 32,000 mmH₂O.

9. The composite textile product according to claim 1, wherein the polyamide film is bonded to the polyamide textile layer by polyurethane reactive hot melt adhesives (PUR).

## Patentansprüche

1. Ein zusammengesetztes Textilprodukt, das folgende Merkmale aufweist:
eine Textilschicht aus Polyamid; und
einen Polyamidfilm, der mit der Textilschicht aus Polyamid verbunden ist, wobei der Polyamidfilm eine durchschnittliche Porengröße im Bereich von 10 µm bis 150 µm aufweist.

2. Das zusammengesetzte Textilprodukt gemäß Anspruch 1, bei dem eine Porosität des Polyamidfilms zwischen 10 % und 20 % beträgt.

3. Das zusammengesetzte Textilprodukt gemäß Anspruch 1, bei dem eine Dicke des Polyamidfilms zwischen 0,01 mm und 0,1 mm beträgt.

4. Das zusammengesetzte Textilprodukt gemäß Anspruch 1, bei dem eine Dicke der Textilschicht aus Polyamid zwischen 0,1 mm und 0,3 mm beträgt.

5. Das zusammengesetzte Textilprodukt gemäß Anspruch 1, bei dem der Polyamidfilm ein Copolymermaterial aufweist und das Copolymermaterial einen Polyamidabschnitt und einen Polyetherabschnitt aufweist.

6. Das zusammengesetzte Textilprodukt gemäß Anspruch 1, bei dem eine Wasserdampfübertragungsrate des zusammengesetzten Textilprodukts zwischen 4.000 g/m²/24 h und 10.000 g/m²/24 h beträgt.

7. Das zusammengesetzte Textilprodukt gemäß Anspruch 1, bei dem eine Wasserdampfübertragungsrate des Polyamidfilms zwischen 6.000 g/m²/24 h und 120.000 g/m²/24 h beträgt.

8. Das zusammengesetzte Textilprodukt gemäß Anspruch 1, bei dem ein Wert des hydrostatischen Drucks des zusammengesetzten Textilprodukts zwischen 30.000 mmH₂O und 32.000 mmH₂O beträgt.

9. Das zusammengesetzte Textilprodukt gemäß Anspruch 1, bei dem der Polyamidfilm mit der Textilschicht aus Polyamid durch Polyurethan-Reaktiv-Heißschmelzklebstoffe (PUR) verbunden ist.

## Revendications

1. Produit textile composite comprenant:
une couche textile de polyamide; et
un film de polyamide lié à la couche textile de polyamide, où le film de polyamide présente une grandeur de pores moyenne allant de 10 µm à 150 µm.

2. Produit textile composite selon la revendication 1, dans lequel la porosité du film de polyamide est comprise entre 10% et 20%.

3. Produit textile composite selon la revendication 1, dans lequel l'épaisseur du film de polyamide est comprise entre 0,01 mm et 0,1 mm.

4. Produit textile composite selon la revendication 1, dans lequel l'épaisseur de la couche textile de polyamide est comprise entre 0,1 mm et 0,3 mm.

5. Produit textile composite selon la revendication 1, dans lequel le film de polyamide comprend un matériau copolymère, et le matériau copolymère comprend un segment de polyamide et un segment de polyéther.

6. Produit textile composite selon la revendication 1, dans lequel un taux de transmission de vapeur d'eau du produit textile composite est compris entre 4.000 g/m²/24 heures et 10.000 g/m²/24 heures.

7. Produit textile composite selon la revendication 1, dans lequel un taux de transmission de vapeur d'eau du film de polyamide est compris entre 6.000 g/m²/24 heures et 120.000 g/m²/24 heures.

8. Produit textile composite selon la revendication 1, dans lequel une valeur de charge hydrostatique du produit textile composite est comprise entre 30.000 mmH₂O et 32.000 mmH₂O.

9. Produit textile composite selon la revendication 1, dans lequel le film de polyamide est lié à la couche textile de polyamide par des colles à fusion réactives de polyuréthane (PUR).
